Europäisches Patentamt

European Patent Office

Office européen des brevets

(11) Publication number: **0 075 319**
**B1**

# EUROPEAN PATENT SPECIFICATION

(45) Date of publication of patent specification: **18.12.85**

(21) Application number: **82108710.3**

(22) Date of filing: **21.09.82**

(51) Int. Cl.⁴: **H 02 J 3/36, H 02 M 5/45**

(54) Control apparatus for d.c. power transmission system.

(30) Priority: **22.09.81 JP 149890/81**
**22.09.81 JP 149891/81**

(43) Date of publication of application:
**30.03.83 Bulletin 83/13**

(45) Publication of the grant of the patent:
**18.12.85 Bulletin 85/51**

(84) Designated Contracting States:
**DE FR GB SE**

(56) References cited:
**EP-A-0 013 615**
**DE-A-2 940 530**

**Patent Abstracts of Japan Vol.3, No. 71, 20
June 1979 page 24E118.**

(73) Proprietor: **Matsumura, Susumu**
**c/o Sohgo Gigyutsu Kenkyusho of Kansai
Electric Power Company Incorporated No. 1,
Nakohji Ichinotsubo
Amagasaki Hyogo Prefecture (JP)**
(73) Proprietor: **MITSUBISHI DENKI KABUSHIKI
KAISHA
2-3, Marunouchi 2-chome Chiyoda-ku
Tokyo 100 (JP)**

(72) Inventor: **Matsumura, Susumu Sogho Gigyutsu
Kenkyusho
Kansai Electric Power Comp. In C. No. 1, Nakohji
Ichinotsubo Amagasaki Hyogo Prefect. (JP)**
Inventor: **Hosokawa, Yasuhiko Power Industrial
Systems Center
Mitsubishi Denki K.K. 1-2, Wadasaki-cho 1-
chome
Hyogo-ku Kobe Hyogo Prefect. (JP)**
Inventor: **Katsuki, Kanji Power Industrial
Systems Center
Mitsubishi Denki K.K. 1-2, Wadasaki-cho 1-
chome
Hyogo-ku Kobe Hyogo Prefect. (JP)**
Inventor: **Yano, Masao Power Industrial
Systems Center
Mitsubishi Denki K.K. 1-2, Wadasaki-cho 1-
chome
Hyogo-ku Kobe Hyogo Prefect. (JP)**

Courier Press, Leamington Spa, England.

**0 075 319**

(74) Representative: **Sajda, Wolf Eckart, Dipl.-Ing. et al**
**MEISSNER, BOLTE & PARTNER Postfach 86 06 24**
**D-8000 München 86 (DE)**

**Description**

The invention relates to a control apparatus for controlling a DC power transmission system, comprising a first converter which is connected between a first AC system and DC power transmission lines and which performs power conversion between AC power and DC power, a second converter which is connected between the DC power transmission lines and a second AC system and which performs power conversion between AC power and DC power, a voltage detector which detects a DC voltage of a smoothing capacitor connected to the DC terminals of the second converter, first control means for comparing the output of the voltage detector with a voltage reference signal, a detector which detects the conversion power of the second converter, and second control means for comparing the output of this detector with a power reference signal, wherein the control means control the ignitions of the converters, respectively, in accordance with deviations of the comparisons.

Such a control apparatus is disclosed in Patent Abstracts of Japan, Vol. 3, No. 71, 20 June 1979, page 24E118 and JP—A—5 449 523. In the system disclosed therein, the converters are not directly connected with each other, rather there is an inductor in one of the transmission lines. A resistor is connected to the two power transmission lines and is connected across the second converter. The first and second control means are connected with each other so that the information detected by the resistor has to be transmitted to the control part for the first converter on the side of the first AC system. When there is a long distance between the two converters, the quality of control will decrease due to transmission lag and noises during transmission of this information. Due to the inductance of the transmission lines there will be a slow response resulting in an undesired control lag.

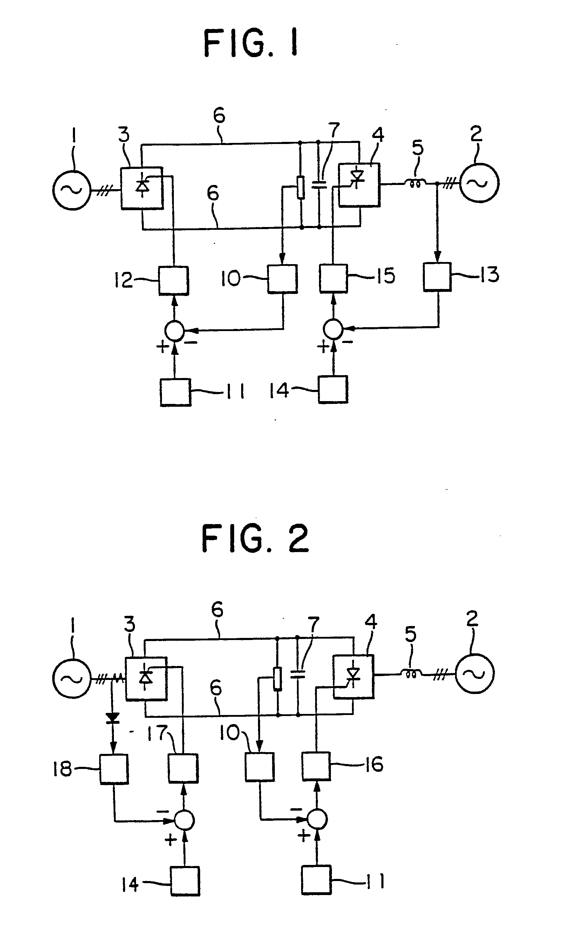

A further prior art DC power transmission system is shown in figure 1. In figure 1 reference numeral 1 designates a first AC system, reference numeral 2 designates a second AC system and reference numeral 3 designates a separately-excited converter connected to the first AC system 1 and changing alternating current into direct current. Reference numeral 4 designates a self-excited converter which has commutation means therein and which is connected to the second AC system through a reactance 5. Reference numeral 6 indicates power transmission lines connected between the DC terminals of the separately-excited converter 3 and of the self-excited converter 4, and reference numeral 7 designates a smooth capacitor which is connected to the DC terminals of the self-excited converter 4.

Attention is drawn to components 13 to 15 which are essential for controlling the DC power transmission. Reference numeral 10 designates a voltage detector which detects a DC voltage across the smoothing capacitor 7, reference numeral 11 designates a voltage reference generator providing reference voltages, and reference numeral 12 designates a voltage controller which takes the difference between the voltage reference and the DC voltage and which changes the ignition pulse phase of the separately-excited converter 3 on the basis of the deviation, wherein the control is carried out so that the deviation is made zero. Control means 13 is a power detector which detects effective power that is exchanged between the second AC system 2 and the self-excited converter 4 through the reactance 5; control means 14 is a power reference generator which gives the reference of the transmission power of the DC power transmission system; and control means 15 is a power controller which takes the difference between the reference of power and the effective power, and which changes the ignition pulse phase of the self-excited converter 4 on the basis of the deviation, wherein the control is carried out so that the deviation is made zero.

In operation, when the reference of voltages has been given by the voltage reference generator 11, it is compared with the DC voltage detected by the voltage detector 10, and the voltage controller 12 changes the control angle of the ignition pulse of the separately-excited converter 3. When the DC voltage is lower, the control angle is advanced, and when the DC voltage is higher, the control angle is retarded, whereby the voltage between the DC terminals of a separately-excited converter 3 is raised or lowered. As a result, charges are stored into or discharged from the smoothing capacitor 7 through the DC power transmission lines 6, and the DC voltage is controlled so as to match with the voltage reference. On the other hand, the self-excited converter 4 changes this DC voltage into alternating current. A voltage of a magnitude proportional to the DC voltage is generated at the AC terminal of the converter 4, and its phase is determined by the ignition pulse phase of this converter 4. Subsequently, when the reference of power has been given by the power reference generator 14, it is compared with the effective power detected by the power detector 13, and the power controller 15 changes the phase of the ignition pulse of the self-excited converter 4. When the power detected by the power detector 13 is smaller than the reference, the phase of the ignition pulse is advanced. As a result, the phase of a voltage occurring at the AC terminal of the converter 4 changes into a phase leading over the voltage phase of the AC system 2, and the phase difference angle increases the quantity of power to flow to the AC system 2 through the reactance 5.

Conversely, when the power detected by the power detector 13 is greater than the reference, the phase of the ignition pulse is retarded. As a result, the phase of a voltage occurring at the AC terminal of the converter 4 changes into a phase lagging behind the voltage phase of the AC system 2, and the phase different angle decreases the quantity of power. Thus, the transmission power is controlled so as to become equal to the power reference. Such a control apparatus as explained above has similar short comings as to decreased controllability due to transmission lag and noise, wherein a control lag is incurred by the inductance of the transmission lines.

The object underlying the invention is to provide an improved control apparatus for controlling a DC power transmission system avoiding control lags even when the converting stations are separated by a long distance, and ensuring a high quality and reliability of the control apparatus in question.

The solution according to the invention is characterized in that the transmission lines are long distance DC power transmission lines connecting the two converters directly, in that the first and second converters are separately-excited and self-excited converters, respectively, and in that the first control means, voltage detector and voltage reference generator form a first control circuit separated from a second control circuit formed by the second control means, detector and voltage reference generator.

One embodiment according to the invention is characterized in that the detector which detects the conversion power of the separately-excited converter detects an AC side current of the separately-excited converter.

Another embodiment of the invention is characterized in that the detector which detects the conversion power of the separately-excited converter is a power detector which detects effective power on the AC side of the separately-excited converter.

A further embodiment according to the invention is characterized in that the detector which detects the conversion power of the separately-excited converter detects direct current of the separately-excited converter.

A further embodiment according to the invention is characterized in that the detector which detects the conversion power of the separately-excited converter detects a product between direct current and a DC voltage of the separately-excited converter.

The invention will be further explained with reference to the attached drawings, wherein

Figure 1 is a block diagram showing a prior art DC power transmission system;

Figure 2 is a block diagram showing a control apparatus according to an embodiment of this invention;

Figure 3 is a diagram showing the construction of an example of a converting station; and

Figure 4 is a diagram showing an example of the structure of a self-excited converter.

In figure 2, reference numerals 1 to 7 refer to the same components as in figure 1. The voltage reference generator 11, the power reference generator 14 and the voltage detector 10 are also mainly the same as in figure 1, however, they are connected in a different way as shown in figure 2. Reference numeral 16 designates first control means for changing the phase difference angle between the AC voltage generated by the self-excited converter and the voltage of the second AC system 2, on the basis of the difference between the outputs of the voltage detector 10 and that of the voltage reference generator 11. On the other hand, reference numeral 18 designates a current detector which detects the direct current flowing through the DC line, on the basis of the alternating current flowing from the first AC system 1 into the separately-excited converter 3, and reference numeral 17 designates second control means for changing the ignition phase of the separately-excited converter 3 on the basis of the difference between the output of the power reference generator 14 and the output of the current detector 18.

The control apparatus shown in figure 2 operates as follows. The voltage reference generator 11 generates a reference for controlling the voltage of the smoothing capacitor 7 to a predetermined value. This reference has a deviation taken with respect to the voltage value detected by the voltage detector 10, and the deviation is applied to the first control means 16 as an input signal. The first control means 16 changes the ignition pulse phase of the self-excited converter 4 on the basis of the voltage deviation. When the voltage value of the smoothing capacitor 7 is smaller than the predetermined value, the ignition pulse phase of the converter 4 is shifted in the lagging direction, with the result that the AC voltage occurring at the AC terminal of the converter 4 lags in phase with respect to the voltage of the AC system 2. Owing to the consequent phase difference angle between both of the ends of the reactance 5, power flows from the AC system 2 towards the converter 4 so that the smoothing capacitor 7 is charged to raise the terminal voltage thereof. Conversely, when the voltage value of the smoothing capacitor 7 is greater than the predetermined value, the first control means 16 functions so as to shift the ignition pulse phase of the self-excited converter 4 in the leading direction. As a result, the AC voltage occurring at the AC terminal of the converter 4 leads in phase with respect to the voltage of the AC system 2. Owing to the consequent phase difference angle between both of the ends of the reactance 5, power flows from the converter 4 towards the AC system 2, and the charges of the smoothing capacitor 7 are discharged to lower the voltage thereof. In this way, the voltage of the smoothing capacitor 7 is held at the predetermined value.

On the other hand, the power reference generator 14 generates the reference of the quantity of power to be transmitted through the DC power transmission lines 6. The current detector 18 rectifies the current flowing to the AC terminal of the converter 3 and thus detects the current flowing the DC power transmission lines 6. This current and the reference of power are compared, and the deviation is applied to the second control means 17 as an input signal. On the basis of this deviation, the second control means 17 changes the ignition pulse phase of the separately-excited converter 3. When the current value detected by the current detector 18 is smaller than the predetermined power reference, the ignition pulse of the converter 3 is shifted in the leading direction. As a result, the voltage between the DC terminals of the converter 3 increases, and the current to flow through the transmission lines 6 from the converter 3 towards the converter 4 increases. Conversely, when the current value detected by the current detector 18 is greater than the predetermined power reference, the ignition pulse of the converter 3 is shifted in the lagging direction. As a result, the voltage between the DC terminals of the converter 3 decreases, and the current to flow through the transmission lines 6 from the converter 3 towards the converter 4 decreases. Since the transmission power through the transmission lines 6 is equal to the product between the voltage of the smoothing capacitor 7 and the current of the DC power transmission lines 6, it is proportional to the current of the transmission lines 6 in this control apparatus in which the voltage of the capacitor 7 is held at the predetermined value. Accordingly, the transmission power is controlled to a predetermined value because the current of the transmission lines 6 is controlled to the predetermined value by the foregoing process.

While in this embodiment the current of the DC power transmission lines 6 detected by the current detector 18 is compared with the reference of power generated by the power reference generator 14, no problem arises, even when the current of the transmission lines 6 is directly detected. A similar effect is achieved even when the power of the AC system 1 is directly detected by the detector corresponding to the power detector 13 in figure 1 and is compared with the power reference, or when the power is detected by taking the product between the DC voltage of the converter 3 and the direct current of transmission lines 6 and is compared with the power reference.

In the control apparatus described above, both of the converting stations can be controlled separately, the long distance control information transmission becomes unnecessary and the reliability increases.

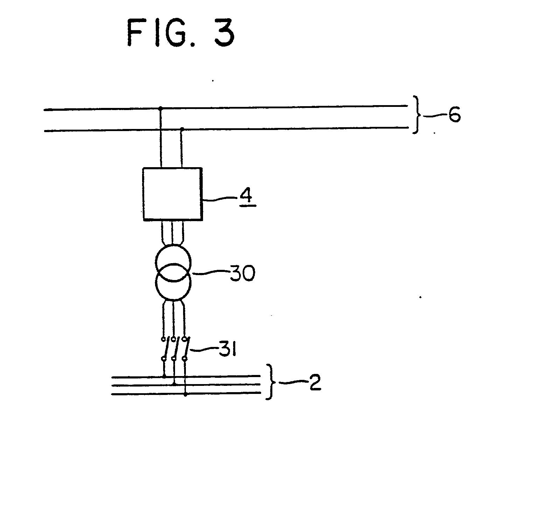

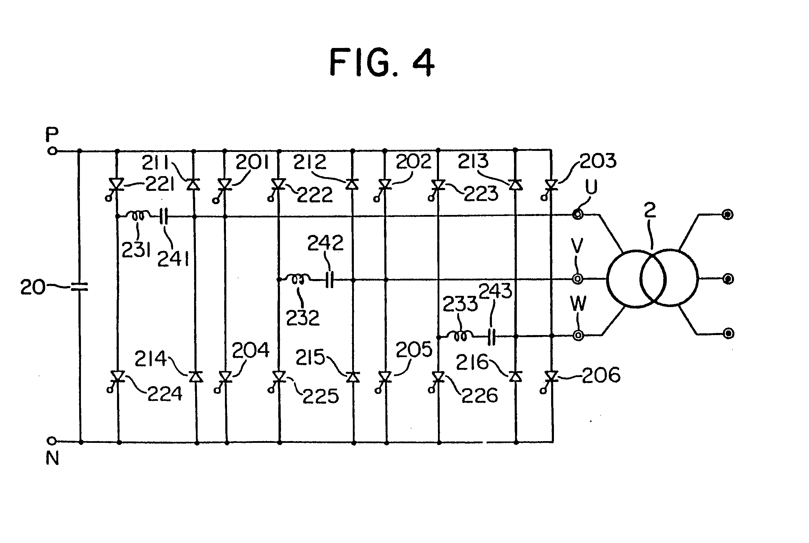

Figure 3 shows the construction of a AC to DC converting station comprising the converter 4 used in the control apparatus according to figure 2. In figure 3, reference numeral 6 designates the power transmission lines of the DC system, reference numeral 4 designates the converter which is connected to the DC system, reference numeral 30 designates a transformer which is connected to the AC side of the converter 4, and reference numeral 31 designates switches which serve to connect the transformer 30 to the AC system 2. The converter 4 is a so-called "self-excited converter" which is constructed of switches having a forced commutation capability, and which is set up as shown in figure 4 by way of example. In figure 4, the letters P and N denote DC terminals which are connected to the DC power transmission lines 6. Reference numeral 20 designates a smoothing capacitor connected across the DC terminal; reference numerals 201, 202, 203, 204, 205 and 206 designate main thyristors; reference numerals 221, 222, 223, 224, 225 and 226 designate auxiliary thyristors; reference numerals 211, 212, 213, 214, 215 and 216 designate flywheel diodes; reference numerals 231, 232 and 233 designate commutating reactors; and reference numerals 241, 242 and 243 designate commutating capacitors. Every two of the main thyristors are connected in series, and AC output terminals U, V and W are led out from the intermediate points of the corresponding pairs of main thyristors. The AC output terminals are connected to the thyristors 30.

When starting the self-excited converter 4 described above, the smoothing capacitor 20 is charged to a predetermined value by a separate power source (not shown), whereupon conduction signals are applied to the thyristors in a predetermined sequence. When the conduction signals have been applied to the thyristors, AC voltages of a magnitude proportional to the DC voltage value of the smoothing capacitor 20 are generated at the AC output terminals U, V and W of the converter 4. Since a great exciting current, a so-called rush current flows to the output transformer 30, measures are taken to suppress this rush current when starting the apparatus in order to avoid excess currents flowing to the arms of the converter 4.

## Claims

1. A control apparatus for controlling a DC power transmission system, comprising a first converter (3) which is connected between a first AC system (1) and DC power transmission lines (6) and which performs power conversion between AC power and DC power, a second converter (4) which is connected between the DC power transmission lines (6) and a second AC system (2) and which performs power conversion between AC power and DC power, a voltage detector (10) which detects a DC voltage of a smoothing capacitor (7) connected to the DC terminals of the second converter (4), first control means (16) for comparing the output of the voltage detector (10) with a voltage reference signal (11), a detector (18) which detects the conversion power of the first converter (3), and second control means (17) for comparing the output of this detector (18) with a power reference signal (14), wherein the control means (16, 17) control the ignitions of the converters (4, 3) in accordance with deviations of the comparisons, characterized in that the transmission lines (6, 6) are long distance DC power transmission lines connecting the two converters (3, 4) directly, in that the first and second converters are separately-excited and self-excited converters (3, 4) and in that the first control means (16), voltage detector (10) and voltage reference generator (11) form a first control circuit (10, 16, 11) separated from a second control circuit (17, 18, 14) formed by the second control means (17), detector (18) and voltage reference generator (14).

2. The control apparatus for a DC power transmission system according to claim 1, characterized in that the detector (18) which detects the conversion power of the separately-excited converter (3) detects an AC side current of the separately-excited converter (3).

3. The control apparatus for a DC power transmission system according to claim 1, characterized in that the detector (18) which detects the conversion power of the separately-excited converter (3) is a power detector which detects effective power on an AC side of the separately-excited converter (3).

4. The control apparatus for a DC power transmission system according to claim 1, characterized in that the detector (18) which detects the conversion power of the separately-excited converter (3) detects direct current of the separately-excited converter (3).

5. The control apparatus for a DC power transmission system according to claim 1, characterized in that the detector (18) which detects the conversion power of the separately-excited converter (3) detects a product between direct current and a DC voltage of the separately-excited converter (3).

**Patentansprüche**

1. Steuervorrichtung zur Steuerung eines Gleichstrom-Energieübertragungssystems, mit einem ersten Wandler (3), der zwischen ein erstes Wechselstrom-System (1) und Gleichstrom-Energieübertragungsleitungen (6) geschaltet ist und der eine Energieumsetzung von Wechselstromenergie in Gleichstromenergie vornimmt, mit einem zweiten Wandler (4), der zwischen die Gleichstrom-Energieübertragungsleitungen (6) und ein zweites Gleichstromsystem geschaltet ist und der eine Energieumsetzung von Wechselstromenergie in Gleichstromenergie vornimmt, mit einem Spannungsmeßfühler (10), der eine Gleichspannung eines Glättungskondensators (7) mißt, der an die Gleichstromanschlüsse des zweiten Wandlers (4) angeschlossen ist, mit einer ersten Steuereinrichtung (16) zum Vergleichen des Ausgangssignals des Spannungsmeßfühlers (10) mit einem Referenzspannungssignal (11), mit einem Meßfühler (18), der die Umsetzungsleistung des ersten Wandlers (3) mißt, und mit einer zweiten Steuereinrichtung (17) zum Vergleichen des Ausgangssignals dieses Meßfühlers (18) mit einem Leistungsreferenzsignal (14), wobei die Steuereinrichtungen (16, 17) die Zündungen der Wandler (4, 3) in Abhängigkeit von Abweichungen der Vergleichsergebnisse steuern, dadurch gekennzeichnet, daß die Übertragungsleitungen (6, 6) Gleichstromenergie-Fernübertragungsleitungen sind, welche die beiden Wandler (3, 4) direkt verbinden, daß die ersten und zweiten Wandler fremderregte bzw. selbsterregte Wandler (3, 4) sind, und daß die erste Steuereinrichtung (16), der Spannungsmeßfühler (10) und der Referenzspannungsgenerator (11) eine erste Steuerschaltung (10, 16, 11) bilden, die von einer zweiten Steuerschaltung (17, 18, 14) getrennt ist, welche von der zweiten Steuereinrichtung (17), dem Meßfühler (18) und dem Referenzspannungsgenerator (14) gebildet wird.

2. Steuervorrichtung für ein Gleichstrom-Energieübertragungssystem nach Anspruch 1, dadurch gekennzeichnet, daß der Meßfühler (18), der die Umsetzungsleistung des fremderregten Wandlers (3) mißt, einen wechselstromseitigen Strom des fremderregten Wandlers (3) mißt.

3. Steuervorrichtung für ein Gleichstrom-Energieübertragungssystem nach Anspruch 1, dadurch gekennzeichnet, daß der Meßfühler (18), der die Umsetzungsleistung des fremderregten Wandlers (3) mißt, ein Leistungsmeßfühler ist, der die effektive Leistung auf der Wechselstromseite des fremderregten Wandlers (3) mißt.

4. Steuervorrichtung für ein Gleichstrom-Energieübertragungssystem nach Anspruch 1, dadurch gekennzeichnet, daß der Meßfühler (18), der die Umsetzungsleistung des fremderregten Wandlers (3) mißt, den Gleichstrom des fremderregten Wandlers (3) mißt.

5. Steuervorrichtung für ein Gleichstrom-Energieübertragungssystem nach Anspruch 1, dadurch gekennzeichnet, daß der Meßfühler (18), der die Umsetzungsleistung des fremderregten Wandlers (3) mißt, ein Produkt zwischen einem Gleichstrom und einer Gleichspannung des fremderregten Wandlers (3) mißt.

**Revendications**

1. Dispositif de réglage pour un système de transport d'énergie en courant continu comprenant un premier convertisseur (3) qui est monté entre un premier système à courant alternatif (1) et des lignes de transport d'énergie en courant continu (6) et qui assure la conversion de l'énergie entre le courant alternatif et le courant continu, un deuxième convertisseur (4) qui est monté entre les lignes de transport d'énergie en courant continu (6) et un deuxième système à courant alternatif (2) et qui assure la conversion de l'énergie entre le courant alternatif et le courant continu, un détecteur de tension (10) qui détecte la tension continue d'un condensateur de lissage (7) connecté aux bornes en courant continu du deuxième convertisseur (4), des premiers moyens de réglage (16) pour comparer la sortie du détecteur de tension (10) à un signal de référence de tension (11), un détecteur (18) qui détecte la puissance de conversion du premier convertisseur (3) et des deuxièmes moyens de réglage (17) pour comparer la sortie de ce détecteur (18) avec un signal de référence de puissance (14), dans lequel les moyens de réglage (16, 17) règlent les allumages des convertisseurs (4, 3) en fonction des déviations des comparaisons, caractérisé en ce que les lignes de transport (6, 6) sont des lignes de transport d'énergie en courant continu à longue distance reliant directement les deux convertisseurs (3, 4), en ce que le premier et le deuxième convertisseurs sont des convertisseurs à excitation séparée et à auto-excitation (3, 4), et en ce que les premiers moyens de réglage (16), le détecteur de tension (10) et le générateur de tension de référence (11) forment un premier circuit de réglage (10, 16, 11) séparé d'un deuxième circuit de réglage (17, 18, 14) formé par des deuxièmes moyens de réglage (17), le détecteur (18) et le générateur de tension de référence (14)

2. Dispositif de réglage pour système de transport d'énergie en courant continu suivant la revendication 1, caractérisé en ce que le détecteur (18) qui détecte la puissance de conversion du convertisseur excité séparément (3) détecte un courant du côté alternatif du convertisseur excité séparément (3).

3. Dispositif de réglage pour système de transport d'énergie en courant continu suivant la revendication 1, caractérisé en ce que le détecteur (18) qui détecte la puissance de conversion du convertisseur excité séparément (3) est un détecteur de puissance qui détecte la puissance effective sur le côté en courant alternatif du convertisseur excité séparément (3).

4. Dispositif de réglage pour système de transport d'énergie en courant continu suivant la revendication 1, caractérisé en ce que le détecteur (18) qui détecte la puissance de conversion du convertisseur excité séparément (3) détecte le courant continu du convertisseur excité séparément (3).

5. Dispositif de réglage pour système de transport d'énergie en courant continu suivant la revendication 1, caractérisé en ce que le détecteur (18) qui détecte la puissance de conversion du convertisseur excité séparément (3) détecte un produit entre le courant continu et un tension continue du convertisseur excité séparément (3).

# FIG. 1

# FIG. 2

# FIG. 3

# FIG. 4